# EUROPEAN PATENT SPECIFICATION

(11) **EP 4 288 241 B1**
(45) Date of publication and mention of the grant of the patent: **07.05.2025**
(21) Application number: 21848044.0
(22) Date of filing: 28.12.2021
(51) Int. Cl.: B23Q 1/00, B23Q 39/00, B23Q 5/06, B23Q 5/10

(54) **DEVICE FOR THE AUTOMATIC CONNECTION OF A HIGH SPEED SPINDLE TO A MULTIFUNCTION NUMERICAL CONTROL MACHINE WITH ROTATING SPINDLE-HOLDER HEAD**
VORRICHTUNG ZUM AUTOMATISCHEN ANSCHLUSS EINER HOCHGESCHWINDIGKEITSSPINDEL AN EINE MULTIFUNKTIONSMASCHINE MIT NUMERISCHEM STEUERUNGSKOPF
DISPOSITIF POUR LA CONNEXION AUTOMATIQUE D'UNE BROCHE À HAUTE VITESSE À UNE MACHINE À COMMANDE NUMÉRIQUE MULTIFONCTION AVEC TÊTE PORTE-BROCHE ROTATIVE

(30) Priority: 04.02.2021 IT 202100002510
(43) Date of publication of application: 13.12.2023
(73) Proprietor: Sales S.r.l., 20020 Arese (IT)
(72) Inventor: GRIMOLDI, Andrea Davide, 20020 ARESE (IT)
(74) Representative: Garavelli, Paolo
(86) International application number: PCT/IT2021/050429
(87) International publication number: WO 2022/168129

(56) References cited:
- DE-A1- 102013 014 290
- US-A- 5 791 032
- US-A- 5 842 259

## Description

The present invention refers to a device for the automatic connection of a high-speed spindle to a multifunction numerical control machine comprising a rotating spindle-holder head, in particular for the automatic connection of a high-speed electrospindle to a tool-holder spindle of a numerically controlled machine with a rotating head that supports a plurality of tool-holder spindles for multiple mechanical machining of pieces.

Multifunction numerical control machines are known in the art and comprise a rotating spindle-holder head which, when it is necessary to perform a machining using a tool connected to one of the spindles, rotates so as to bring the selected spindle, and the tool coupled thereto, in correspondence to a work station, so as to be able to perform the processing.

These known multifunction numerical control machines comprise a rotating spindle-holder head which supports a plurality of spindles, whose the tool-holder spindle is connected to an electric motor which must be sized according to performances, in terms of rotation speed and drive torque, required to the tool to perform the machining.

When used for machining with tools at high rotation speeds, known multifunction numerical control machines require the use of a specific electrospindle, including a tool and an electric motor for high-speed drive of the tool; the rotating spindle-holder head can support more than one electrospindle, each connected to a respective tool-holder spindle, which, at each rotation of the rotating head, has the problem of having to be coupled to the multifunction numerical control machine with a series of electrical, hydraulic connectors and/or tires, with a consequent waste of time and an increase in processing costs.

DE-A1-10 2013 014290 and US-A-5 791 032 disclose devices according to the preamble of Claim 1.

Object of the present invention is solving the aforementioned prior art problems, by providing a device for connecting a high-speed spindle to a multifunction numerical control machine with a rotating spindle-holder head, which allows the electrospindle to be used at high speed, which is located next to a work station by automatically connecting it to the multifunction numerical control machine, following the rotation of the rotating head, with a saving of time and a reduction in processing costs.

The aforementioned and other objects and advantages of the invention, as will emerge from the following description, are achieved with a device for the automatic connection of a high-speed spindle to a multifunction numerical control machine with a rotating spindle-holder head such as the one described in claim 1. Preferred embodiments and non-trivial variants of the present invention form the subject of the dependent claims.

It is understood that all attached claims form an integral part of the present description.

It will be immediately obvious that numerous variations and modifications (for example relating to shape, dimensions, arrangements and parts with equivalent functionality) can be made to what is described without departing from the scope of the invention as defined by the attached claims.

The present invention will be better described by some preferred embodiments thereof, provided by way of non-limiting example, with reference to the attached drawings, in which:

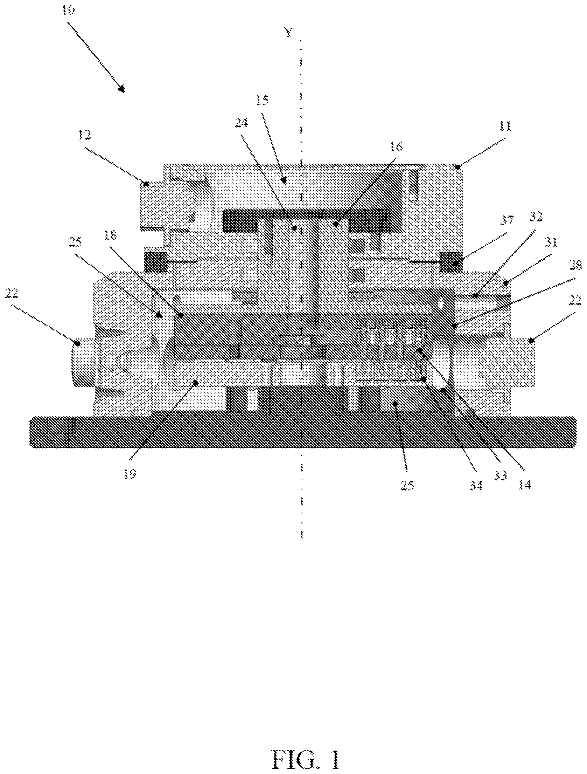

- Figure 1 shows a sectional view of a device for the automatic connection of a high speed spindle to a multifunction numerical control machine with a rotating spindle-holder head according to the present invention;

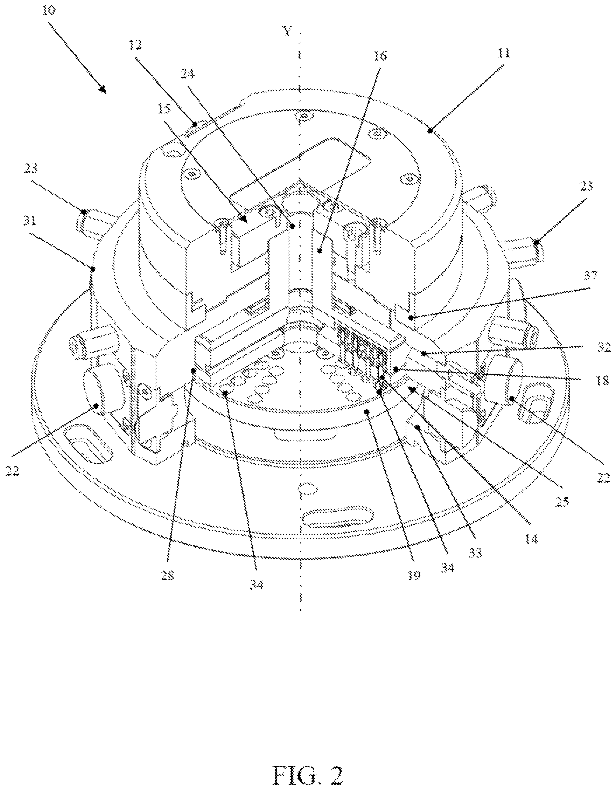

- Figure 2 shows a sectional perspective view of a device for the automatic connection of a high-speed spindle to a multifunction numerical control machine with a rotating spindle-holder head according to the present invention; and

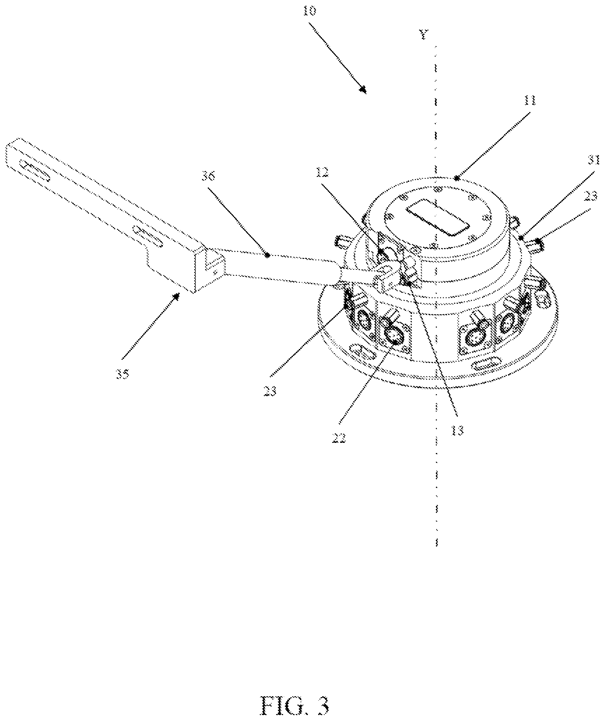

- Figure 3 shows a perspective view of a device for the automatic connection of a high-speed spindle to a multifunction numerical control machine with a rotating spindle-holder head according to the present invention.

With reference to the Figures, the device 10 for the automatic connection of a high-speed spindle to a multifunction numerical control machine with a rotating spindle-holder head of the present invention comprises a first connection element 11 configured to be connected to an electrical power supply network by means of first electrical connection means 12 and to a pressurized air supply network by means of first pneumatic connection means 13, and a second connection element 31 configured to be fixed to the rotating spindle-holder head of a multifunction numerical control machine and to be connected to the spindle at high speed by means of second electrical connection means 22 and second pneumatic connection means 23, said first 11 and second 31 connecting elements being rotatably connected with respect to each other to automatically perform the electrical and pneumatic connection of the high-speed spindle which, following the rotation of the rotating spindle-holder head to which it is connected, is in the working position; preferably, the high-speed spindle is an electrospindle comprising a tool and an electric motor for the high-speed drive of the tool, and is coupled to a tool-holder spindle of the rotating spindle-holder head; advantageously, the device 10 for the automatic connection of a high-speed spindle to a multifunction numerical control machine of the invention allows a plurality of rotary electro-spindles mounted on the head to be connected to the electrical power supply network and the pressurized air supply network, each coupled to a respective tool holder spindle, when they are brought in their working position.

The first electrical connection means 12 consist, for example, of an electrical connector 12 of a known type for connecting the device 10 to the electrical power supply network, and the first pneumatic connection means 13, consist, for example of a quick coupling connector, for the connection of the device 10 to the pressurized air supply network.

The first connection element 11 further comprises a duct 24, preferably made in an axial direction in correspondence with a Y axis of rotation of the first 11 and/or of the second connection element 31, to transfer the pressurized air to the second connection element 31.

The second electrical connection means 22 consist, for example, of at least two electrical connectors 22, preferably a plurality of known connectors, and the second pneumatic connection means 23 consist, for example, of quick-fit connectors, for connecting the device 10 to the high-speed electrospindle.

Preferably, said electrical connectors 22 and sai pneumatic connectors 23 of the second connection element 31 are arranged in a radial direction with respect to the rotation axis Y of the first 11 and/or of the second connection element 31, in the number of an electric connector 22 and a pneumatic connector 23 for each tool holder spindle connected to the rotating spindle-holder head; for example, the tool holder spindles are arranged in a radial direction with respect to the rotation axis Y.

Preferably, the duct 24 for the passage of pressurized air is connected to a first chamber 15 obtained in the first connection element 11 and connected to the pressurized air supply network by means of the first pneumatic connection means 13.

According to the invention, the duct 24 for the passage of pressurized air is connected to a second chamber 25, obtained in the second connecting element 31, to connect it to the pressurized air supply network; for example, the second chamber 25 has a substantially cylindrical shape, and comprises a wall 28 on which conduits 32 for connection to the pneumatic connectors 23 are formed; the wall 28 also includes openings 33 for the insertion of the electrical connectors 22.

According to the invention, the first connection element 11 comprises at least one first electrical contact element 14, preferably a spring contact of a known type, for example a plurality of spring contacts which can be made of nickel, silver, stainless steel, copper-beryllium, gold-plated, connected to said electric connector 12, for example by means of an electric cable, to connect the high-speed electrospindle to the electric power supply network.

The second connecting element 31 comprises at least one second electrical contact element 34, preferably a plurality of pads of known type made of electrically conductive material, configured to establish an electrical contact with said at least one first electrical contact element 14 and connected to one of said at least two electrical connectors 22, for example by means of an electrical cable passing through the openings 33 made in the wall 28, to electrically power the electrospindle at high speed.

Preferably, the first connection element 11 comprises four first electrical contact elements 14, (one for each phase and one connected to earth), preferably aligned in a radial direction with respect to the Y axis and the second connection element 31 comprises a plurality of second electrical contact elements 34 configured to contact the first electrical contact elements 14 when said first 11 and second 31 connecting elements rotate relative to each other.

Preferably, the first electrical contact elements 14 are connected to a first disc-shaped element 18 and the second electrical contact elements 34 are connected to a second disc-shaped element 19, said first and second disc-shaped elements being arranged in the second chamber 25, facing each other, and rotatably connected to each other so that the second electrical contact elements 34, arranged in groups of four contact elements, are brought into contact with the first electrical contact elements 14; preferably, each group of four contact elements is in proximity to one of said at least two electrical connectors 22.

Preferably, the first connection element 11 comprises a hollow shaft 16 connected to the first disc-shaped element 18, inside which the coaxial duct 24 is formed and the second connection element 31 comprises an opening, for example a hole, arranged at the outlet of the duct 24.

Preferably, the facing surfaces of the first connecting element 11 and of the second connecting element 31 are complementary.

Preferably, the first and/or second connecting element 11, 31 comprise sealing means 37, for example a sealing gasket 37 inserted in a groove formed on the external surfaces of the first and second connecting elements 11, 31, to sealingly connect the first connecting element 11 and the second connecting element 31 so as to prevent the air flow, flowing between the first and second connecting elements 11, 31, from escaping to the outside, and to allow the flow to pass air from the first connecting element 11 to the second connecting element 31 through the duct 24 to send it to the mandrel 40.

Preferably, the first connection element 11 is kept locked, to prevent its rotation during the rotation of the second connection element 31, by means of locking means 35, for example comprising an articulated arm 36 which comprises a fixed pneumatic or hydraulic cylinder, for example screwed to the first connecting element 11.

In the operation of the device 10 of the present invention, the second connecting element 31 is fixed to the rotating spindle-holder head of a multifunction numerical control machine, keeping the different high-speed spindles which are installed in the rotating head connected to respective electrical connectors 22 and 23, so that the second connecting element 31 can rotate with the rotating head to connect the high-speed spindle that is in the working position to the power supply network, automatically connecting the second connected electrical contact elements 34 to the electrical connector 12, which in turn is connected to the high-speed spindle which is in the working position, with the first electrical contact elements 14 of the first connecting element 11 which remains stationary, held by the locking means 35 and connected to the electrical and pneumatic power supply networks, while the various high-speed spindles are always connected to the pneumatic connectors 23.

Advantageously, the device for the automatic connection of a high-speed spindle to a numerically controlled machine according to the present invention allows for the automatic connection of a high-speed electrospindle located in correspondence to a workstation to the electrical and pneumatic power supply networks of a multifunction numerical control machine, following the rotation of the rotating head, with a saving of time and reduction of the processing cost, in a fast and reliable way.

## Claims

1. Device (10) for the automatic connection of a high-speed spindle to a numerically controlled machine, comprising a first connecting element (11) configured to be connected to an electrical power supply network by means of first connection means (12) and to a pressurized air supply network by means of first pneumatic connection means (13), and a second connection element (31) configured to be fixed to the rotating spindle holder head of a multifunction numerical control machine and to be connected to the high-speed spindle by means of second electrical connection means (22) and second pneumatic connection means (23), said first (11) and second (31) connecting elements being rotatably connected with respect to each other to automatically perform an electrical and pneumatic connection of the high-speed spindle which, following the rotation of the rotating spindle-holder head to which it is connected, is in the working position, said first connecting element (11) comprising at least one first electrical contact element (14) connected to the power supply network and said second connecting element (31) comprising at least one second electrical contact element (34) configured to make electrical contact with said at least one first electrical contact element (14) and electrically connected to the high speed electro-spindle,
wherein the first connecting element (11) includes a duct (24) to transfer the pressurized air from the first connecting element (11) to the second connecting element (31), and
wherein the duct (24) is connected to a second chamber (25) obtained in the second connection element (31) to connect it to the pressurized air supply network, said second chamber (25) being connected to the second pneumatic connection means (23),
wherein the second chamber (25) comprises a wall (28) on which connection ducts (32) are obtained, one connection duct (32) for each individual of the second pneumatic connection means (23),
**characterized in that** said wall (28) further comprises openings (33), each opening (33) for the insertion of a single of each of the second electrical connection means (22).

2. Device (10) for the automatic connection of a high-speed spindle to a numerically controlled machine according to claim 1, **characterized in that** the duct (24) for the passage of pressurized air is connected to a first chamber (15) obtained in the first connection element (11) and connected to the pressurized air supply network by means of the first pneumatic connection means.

3. Device (10) for the automatic connection of a high-speed spindle to a numerically controlled machine according to any one of the preceding claims, **characterized in that** said first electrical contact element (14) is a spring contact and said second electrical contact element (34) is a pad, both made of electrically conductive material.

4. Device (10) for the automatic connection of a high-speed spindle to a numerically controlled machine according to any one of the preceding claims, **characterized in that** the first connecting element (11) comprises four first electrical contact elements (14), and the second connecting element (31) comprises a plurality of second electrical contact elements (34) configured to contact the first electrical contact elements (14) when said first (11) and second (31) connecting elements rotate relative to each other.

5. Device (10) for the automatic connection of a high-speed spindle to a numerically controlled machine according to any one of the preceding claims, **characterized in that** the first electrical contact elements (14) are connected to a first disc-shaped element (18) and the second electrical contact elements (34) are connected to a second disc-shaped element (19), said first and second disc-shaped elements (18, 19) being arranged in the second chamber (25), facing each other and rotatable one on the other so that the second electrical contact elements (34) are brought into contact with the first electrical contact elements (14).

6. Device (10) for the automatic connection of a high-speed spindle to a numerically controlled machine according to any one of the preceding claims, **characterized in that** the duct (24) is made in the axial direction in correspondence of a rotation axis (Y) of the first (11) and second (31) connecting elements and **in that** the first (14) and second (34) electrical contact elements are arranged in a radial direction with respect to the rotation axis (Y) of the first (11) and/or of the second (31) connecting elements.

7. Device (10) for the automatic connection of a high-speed spindle to a numerically controlled machine according to claim 5 or claim 6 when it depends on claim 5, **characterized in that** the first connecting element (11) comprises a hollow shaft (16) connected to the first disc-shaped element (18) inside which the coaxial duct (24) is formed.

## Patentansprüche

1. Vorrichtung (10) zum automatischen Anschluss einer Hochgeschwindigkeitsspindel an eine numerisch gesteuerte Maschine, umfassend ein erstes Anschlusselement (11), das dazu ausgebildet ist, mittels erster elektrischer Anschlussmittel (12) an ein elektrisches Energieversorgungsnetz angeschlossen zu werden. und an ein Druckluftversorgungsnetz über erste pneumatische Verbindungsmittel (13) und ein zweites Verbindungselement (31), das so konfiguriert ist, dass es am rotierenden Spindelhalterkopf einer multifunktionalen numerischen Steuerungsmaschine befestigt werden kann, und über zweite elektrische Anschlussmittel (22) und zweite pneumatische Anschlussmittel (23) mit der Hochgeschwindigkeitsspindel zu verbinden, wobei das erste (11) und das zweite (31) Anschlusselement drehbar zueinander verbunden sind und anderen, um automatisch einen elektrischen und pneumatischen Anschluss der Hochgeschwindigkeitsspindel durchzuführen, die sich nach der Drehung des rotierenden Spindelhalterkopfes, mit dem sie verbunden ist, in der Arbeitsposition befindet, wobei das erste Verbindungselement (11) mindestens eines umfasst erstes Kontaktelement elektrisches Kontaktelement (14), das mit dem elektrischen Stromversorgungsnetz verbunden ist und wobei das zweite Verbindungselement (31) mindestens ein zweites elektrisches Kontaktelement (34) umfasst, das so konfiguriert ist, dass es einen elektrischen Kontakt mit dem mindestens einen ersten elektrischen Kontaktelement (14) herstellt, und elektrisch mit der Hochgeschwindigkeits-Elektrospindel verbunden,
wobei das erste Verbindungselement (11) einen Kanal (24) zum Übertragen von Druckluft vom ersten Verbindungselement (11) zum zweiten Verbindungselement (31) umfasst, und
wobei der Kanal (24) mit einer zweiten Kammer (25) verbunden ist, die im zweiten Verbindungselement (31) erhalten ist, um es mit dem Druckluftversorgungsnetz zu verbinden, wobei die zweite Kammer (25) mit dem zweiten Verbindungsmittel Reifen (23) verbunden ist,
wobei die zweite Kammer (25) eine Wand (28) aufweist, an der Verbindungskanäle (32) vorgesehen sind, ein Verbindungskanal (32) für jedes einzelne der zweiten pneumatischen Verbindungsmittel (23),
**dadurch gekennzeichnet, dass** die Wand (28) auch Öffnungen (33) aufweist, wobei jede Öffnung (33) zum Einsetzen jedes der zweiten elektrischen Verbindungsmittel (22) dient.

2. Vorrichtung (10) zum automatischen Anschluss einer Hochgeschwindigkeitsspindel an eine numerisch gesteuerte Maschine nach Anspruch 1, **dadurch gekennzeichnet, dass** der Kanal (24) für den Durchgang von Druckluft mit einer ersten erhaltenen Kammer (15) verbunden ist im ersten Anschlusselement (11) angeordnet und über die ersten pneumatischen Anschlussmittel mit dem Druckluftversorgungsnetz verbunden.

3. Vorrichtung (10) zum automatischen Anschluss einer Hochgeschwindigkeitsspindel an eine numerisch gesteuerte Maschine nach einem der vorhergehenden Ansprüche, **dadurch gekennzeichnet, dass** das erste elektrische Kontaktelement (14) ein Federkontakt ist und das zweite elektrische Kontaktelement (34) ist eine Unterlage, beide aus elektrisch leitendem Material.

4. Vorrichtung (10) zum automatischen Anschluss einer Hochgeschwindigkeitsspindel an eine numerisch gesteuerte Maschine nach einem der vorhergehenden Ansprüche, **dadurch gekennzeichnet, dass** das erste Verbindungselement (11) vier erste elektrische Kontaktelemente (14) umfasst und die Das zweite Verbindungselement (31) umfasst mehrere zweite elektrische Kontaktelemente (34), die so konfiguriert sind, dass sie mit den ersten elektrischen Kontaktelementen (14) in Kontakt kommen, wenn das erste (11) und das zweite (31) Verbindung rotieren relativ zueinander.

5. Vorrichtung (10) zum automatischen Anschluss einer Hochgeschwindigkeitsspindel an eine numerisch gesteuerte Maschine nach einem der vorhergehenden Ansprüche, **dadurch gekennzeichnet, dass** die ersten elektrischen Kontaktelemente (14) mit einem ersten scheibenförmigen Element verbunden sind ( 18) und die zweiten elektrischen Kontaktelemente (34) mit einem zweiten scheibenförmigen Element (19) verbunden sind, wobei das erste und das zweite scheibenförmige Element (18, 19) einander zugewandt in der zweiten Kammer (25) angeordnet sind und zueinander drehbar, so dass die zweiten elektrischen Kontaktelemente (34) mit den ersten elektrischen Kontaktelementen (14) in Kontakt gebracht werden.

6. Vorrichtung (10) zum automatischen Anschluss einer Hochgeschwindigkeitsspindel an eine numerisch gesteuerte Maschine nach einem der vorhergehenden Ansprüche, **dadurch gekennzeichnet, dass** der Kanal (24) in axialer Richtung entsprechend einer Achse (Y) ausgeführt ist, der Drehung des ersten (11) und zweiten (31) Verbindungselements und dadurch, dass die ersten (14) und zweiten (34) elektrischen Kontaktelemente in einer radialen Richtung bezüglich der Drehachse (Y) angeordnet sind des ersten (11) und/oder das zweite (31) Verbindungselement.

7. Vorrichtung (10) zum automatischen Anschluss einer Hochgeschwindigkeitsspindel an eine numerisch gesteuerte Maschine nach Anspruch 5 oder Anspruch 6, wenn dieser auf Anspruch 5 rückbezogen ist, **dadurch gekennzeichnet, dass** das erste Verbindungselement (11) eine Hohlwelle (16) mit dem ersten scheibenförmigen Element (18) verbunden, in dessen Inneren sich der Koaxialkanal (24) befindet.

## Revendications

1. Dispositif (10) de connexion automatique d'une broche rapide à une machine à commande numérique, comprenant un premier élément de connexion (11) configuré pour être connecté à un réseau d'alimentation électrique au moyen de premiers moyens de connexion électrique (12) et à un réseau d'alimentation en air sous pression via des premiers moyens de connexion pneumatique (13), et un deuxième élément de connexion (31) configuré pour être fixé à la tête porte-broche tournante d'une machine à commande numérique multifonction et devant être connecté à la broche à grande vitesse via des seconds moyens de connexion électrique (22) et des seconds moyens de connexion pneumatique (23), lesdits premier (11) et second (31) éléments de connexion étant connectés de manière rotative l'un par rapport à l'autre, le autre pour réaliser automatiquement une connexion électrique et pneumatique de la broche rapide qui, suite à la rotation de la tête porte-broche tournante à laquelle elle est reliée, est en position de travail, ledit premier élément de connexion (11) comprenant au moins un premier élément de contact élément de contact électrique (14) connecté au réseau d'alimentation électrique et ledit deuxième élément de connexion (31) comprenant au moins un deuxième élément de contact électrique (34) configuré pour établir un contact électrique avec ledit au moins un premier élément de contact électrique (14) et relié électriquement à l'électrobroche rapide,
dans lequel le premier élément de connexion (11) comprend un conduit (24) pour transférer de l'air sous pression du premier élément de connexion (11) au deuxième élément de connexion (31), et
dans lequel le conduit (24) est relié à une deuxième chambre (25) obtenue dans le deuxième élément de connexion (31) pour le connecter au réseau d'alimentation en air sous pression, ladite deuxième chambre (25) étant reliée au deuxième moyen de connexion du pneu (23),
dans lequel la deuxième chambre (25) comprend une paroi (28) sur laquelle sont réalisés des conduits de connexion (32), un conduit de connexion (32) pour chaque individu des deuxièmes moyens de connexion pneumatique (23),
**caractérisé en ce que** ladite paroi (28) comprend également des ouvertures (33), chaque ouverture (33) étant destinée à l'insertion de chacun des seconds moyens de connexion électrique (22).

2. Dispositif (10) de raccordement automatique d'une broche rapide à une machine à commande numérique selon la revendication 1, **caractérisé en ce que** le conduit (24) de passage de l'air sous pression est relié à une première chambre (15) obtenue dans le premier élément de connexion (11) et relié au réseau d'alimentation en air sous pression au moyen des premiers moyens de connexion pneumatique.

3. Dispositif (10) de connexion automatique d'une broche rapide à une machine à commande numérique selon l'une quelconque des revendications précédentes, **caractérisé en ce que** ledit premier élément de contact électrique (14) est un contact à ressort et ledit deuxième élément de contact électrique (14) est un contact électrique. 34) est un tampon, tous deux constitués d'un matériau électriquement conducteur.

4. Dispositif (10) de connexion automatique d'une broche rapide à une machine à commande numérique selon l'une quelconque des revendications précédentes, **caractérisé en ce que** le premier élément de connexion (11) comprend quatre premiers éléments de contact électrique (14), et le le deuxième élément de connexion (31) comprend une pluralité de deuxièmes éléments de contact électrique (34) configurés pour entrer en contact avec les premiers éléments de contact électrique (14) lorsque lesdits premier (11) et deuxième (31) connexion tournent les unes par rapport aux autres.

5. Dispositif (10) de connexion automatique d'une broche rapide à une machine à commande numérique selon l'une quelconque des revendications précédentes, **caractérisé en ce que** les premiers éléments de contact électrique (14) sont reliés à un premier élément en forme de disque (18) et les deuxièmes éléments de contact électrique (34) sont reliés à un deuxième élément en forme de disque (19), lesdits premier et deuxième éléments en forme de disque (18, 19) étant disposés dans la deuxième chambre (25), face à face. et rotatifs les uns sur les autres de sorte que les seconds éléments de contact électrique (34) soient mis en contact avec les premiers éléments de contact électrique (14).

6. Dispositif (10) de connexion automatique d'une broche rapide à une machine à commande numérique selon l'une quelconque des revendications précédentes, **caractérisé en ce que** le conduit (24) est réalisé dans le sens axial en correspondance avec un axe (Y) de rotation du premier (11) et du deuxième (31) éléments de connexion et par le fait que les premier (14) et deuxième (34) éléments de contact électrique sont disposés selon une direction radiale par rapport à l'axe (Y) de rotation du premier (11) et/ou le deuxième (31) élément de liaison.

7. Dispositif (10) de liaison automatique d'une broche rapide à une machine à commande numérique selon la revendication 5 ou la revendication 6 lorsqu'elle dépend de la revendication 5, **caractérisé en ce que** le premier élément de liaison (11) comprend un arbre creux (16) relié au premier élément en forme de disque (18) à l'intérieur duquel se trouve le conduit coaxial (24).
